# EUROPÄISCHE PATENTSCHRIFT

(11) **EP 4 233 159 B1**
(45) Veröffentlichungstag und Bekanntmachung des Hinweises auf die Patenterteilung: **17.07.2024**
(21) Anmeldenummer: 20800641.1
(22) Anmeldetag: 03.11.2020
(51) Int. Cl.: H02K 15/00

(54) **DRAHTENDENBIEGEVORRICHTUNG UND VERFAHREN ZUM VERBIEGEN VON DRAHTENDEN BEIM HERSTELLEN EINES MIT SPULEN VERSEHENEN BAUTEILS EINER ELEKTRISCHEN MASCHINE**
WIRE-END BENDING APPARATUS AND METHOD FOR BENDING WIRE ENDS WHEN PRODUCING AN ELECTRICAL MACHINE COMPONENT PROVIDED WITH COILS
APPAREIL DE CINTRAGE D'EXTRÉMITÉS DE FIL ET PROCÉDÉ DE CINTRAGE D'EXTRÉMITÉS DE FIL LORS DE LA PRODUCTION D'UN COMPOSANT DE MACHINE ÉLECTRIQUE POURVU DE BOBINES

(43) Veröffentlichungstag der Anmeldung: 30.08.2023
(73) Patentinhaber: Grob-Werke GmbH & Co. KG, 87719 Mindelheim (DE)
(72) Erfinder: BINDER, Johannes, 87719 Mindelheim (DE); HAGGENMÜLLER, Tobias, 87647 Unterthingau (DE)
(74) Vertreter: KASTEL Patentanwälte PartG mbB
(86) Internationale Anmeldenummer: PCT/EP2020/080800
(87) Internationale Veröffentlichungsnummer: WO 2022/096079

(56) Entgegenhaltungen:
- WO-A1-2019/161846
- US-A1- 2009 249 853
- US-A1- 2018 375 409

## Beschreibung

Die Erfindung betrifft eine Drahtendenbiegevorrichtung zum Verbiegen von Drahtenden beim Herstellen eines mit Spulen versehenen Bauteils einer elektrischen Maschine. Weiterhin betrifft die Erfindung ein Verfahren zum Verbiegen von Drahtenden beim Herstellen eines mit Spulen versehenen Bauteils einer elektrischen Maschine.

Unter elektrischen Maschinen werden insbesondere Maschinen zum Umwandeln elektrischer Energie in Bewegungsenergie und Maschinen zum Umwandeln von Bewegungsenergie in elektrische Energie verstanden. Insbesondere sind darunter Elektromotoren und Generatoren zu verstehen.

Bei der Herstellung von Maschinenelementen bzw. Bauteilen derartiger elektrischer Maschinen, wie beispielsweise Statoren oder Rotoren, ist es oft erforderlich, Enden von aus Drähten gebildeten Leitern miteinander zu verbinden oder auf andere Weise gemeinsam zu verarbeiten, wie z.B. gemeinsam zu schneiden oder zu formen.

Zum Beispiel gibt es Elektromotoren, bei denen Spulenwicklungen, insbesondere des Stators, aus unterschiedlichen Drahtstücken gebildet werden, deren Enden dann miteinander verbunden werden. Es sind Vorrichtungen und Verfahren zum Verbinden von Drahtenden von Hairpins zum Bilden von Statorwicklungen von elektrischen Maschinen bekannt, bei denen die Drahtenden miteinander verschweißt werden. Hierbei sind Vorrichtungen und Verfahren zum Positionieren und Verspannen der Drahtenden vor dem Verschweißen vorgesehen.

Um die elektrische Verschaltung insbesondere von Statoren zu ermöglichen, werden zum Beispiel in einem Prozessschritt die Endabschnitte von Stableitern verdrillt. Für diesen Prozessschritt müssen die Stableiter bzw. Pins oder Hairpins zunächst hergestellt und in ein Blechpaket gefügt werden. Aufgrund des geringen Abstandes zwischen den Endabschnitten der Stableiter nach dem Fügeprozess, werden diese in einem nächsten Schritt geweitet, um ein präzises Verdrillen bzw. Schränken zu ermöglichen. Um einen Abstand zwischen den einzelnen Stableitern oder Leitern zu erzeugen, werden bei einem Weitprozess deren Endabschnitte in radialer Richtung umgeformt.

Bei Statoren sind zum Beispiel in einer Nut des Gehäuses des Stators mehrere Leiter angeordnet. Üblicherweise werden alle Leiter, welche nach dem Weitprozess auf einem Radius liegen, mit einem Werkzeug bearbeitet. Bei dieser Bearbeitung werden alle Leiterenden zunächst in Taschen des Werkzeugs eingeführt und anschließend verdrillt, wobei eine Rotation des Werkzeugs um Mittelachse erfolgt. Diese Verdrillung bewirkt ein Verkürzen der Stableiter in axialer Richtung. Um zu verhindern, dass zwischen den Stableitern und dem Werkzeug, das zum Beispiel als eine Schränkkrone ausgebildet ist, eine Relativbewegung entsteht und die Stableiter oder ihre Isolation beschädigt werden, muss der Stator oder die Schränkkrone in axialer Richtung nachgefahren werden. Diese Bewegung folgt einem komplexen Geschwindigkeitsprofil, da die Stableiter dreidimensional verformt werden.

Üblicherweise werden radial benachbarte Stableiter in entgegengesetzter Richtung verdrillt, so dass mindestens zwei Schränkkronen zum Einsatz kommen.

In der Druckschrift WO 2019/161846 A1 wird eine Vorrichtung beschrieben, mit der zum Beispiel acht Schränkkronen verwendet werden und demnach acht Schränkebenen realisiert werden. Nachteilig ist jedoch der hohe Platzbedarf in vertikaler Richtung. Des Weiteren erfordert dieser Aufbau sehr lange und zugleich dünnwandige Schränkwerkzeuge mit einer hülsenartigen Grundform, die aufgrund ihres dadurch aufwändigen Herstellverfahrens kostenintensiv sind.

Ein ähnlicher Aufbau wird in WO 2017/104685 A1 beschrieben. Dabei sind die Schränkwerkzeuge dickwandiger ausgeführt; eine größere Anzahl an Schränkwerkzeugen führt jedoch zu einem sehr komplexen Aufbau und/ oder dünnwandigen Werkzeugen.

EP 2 849 319 A1 beschreibt einen anderen Ansatz zur Lagerung der Schränkwerkzeuge. Hier wird ein sehr kompakter Aufbau dadurch erzielt, dass jeweils nur zwei Schränkwerkzeuge gleichzeitig im Eingriff sind. Jedoch wird bei einem Schränkprozess, bei dem alle Achsen gleichzeitig im Eingriff sind, eine geringere Taktzeit möglich und ein besseres Schränkergebnis erzielt, zum Beispiel durch die Beeinflussung der Pins untereinander. Bei einem Schränken nacheinander können sich die Pins untereinander stärker durch ihr Auffederverhalten beeinflussen.

Aus der US 2018/0375409 A1 sind ein Verfahren zum Herstellen eines Stators und eine Vorrichtung hierfür bekannt. Die Vorrichtung hat mehrere Verschränk- und Biegeeinheiten, die dazu ausgebildet sind, unabhängig voneinander zu drehen und eine Verschiebeeinrichtung zum Verschieben eines Statorkerns beim Verschränken.

Eine weitere Verschränkvorrichtung ist aus der US 2009/0249853 A1 bekannt.

Die Erfindung hat sich zur Aufgabe gestellt, eine Drahtendenbiegevorrichtung zum Verbiegen von Drahtenden beim Herstellen eines mit Spulen versehenen Bauteils einer elektrischen Maschine zu schaffen, die sich durch eine geringe Höhe auszeichnet und eine Gestaltung und Herstellung von kostengünstigen Schränkwerkzeugen ermöglicht. Weiterhin soll ein Verfahren zum Verbiegen von Drahtenden beim Herstellen eines mit Spulen versehenen Bauteils einer elektrischen Maschine angegeben werden, das schnell und zuverlässig durchführbar ist und eine hohe Qualität des hergestellten Bauteils ermöglicht.

Die Aufgabe wird gelöst durch eine Drahtendenbiegevorrichtung gemäß Patentanspruch 1 und durch das Verfahren gemäß Patentanspruch 8. Vorteilhafte Ausgestaltungen, Merkmale und Details sind Gegenstand der abhängigen Ansprüche.

Gemäß einem ersten Aspekt schafft die Erfindung eine Drahtendenbiegevorrichtung zum Verbiegen von Drahtenden beim Herstellen eines mit Spulen versehenen Bauteils einer elektrischen Maschine, wobei die Drahtenden aus einem ringförmigen Gehäuse des Bauteils herausragen und in einer Umfangsrichtung gebogen werden, umfassend eine erste Aufnahme- und Dreheinrichtung zum Aufnehmen von ersten Drahtenden und zum Verdrehen der ersten Drahtenden zwecks Verbiegen in Umfangsrichtung, mindestens eine zweite Aufnahme- und Dreheinrichtung zum Aufnehmen von zu den ersten Drahtenden radial versetzten zweiten Drahtenden und zum Verdrehen der zweiten Drahtenden zwecks Verbiegen in Umfangsrichtung, ein erstes Antriebselement zum Antreiben der ersten Aufnahme- und Dreheinrichtung, ein zweites Antriebselement zum Antreiben der zweiten Aufnahme- und Dreheinrichtung, mehrere Axiallager zur Aufnahme von auf die Aufnahme- und Dreheinrichtungen wirkenden Axialkräften, und zur Lagerung der Aufnahme- und Dreheinrichtungen, so dass sie relativ zueinander und zu dem Gehäuse um eine gemeinsame Achse drehbar, jedoch in axialer Richtung relativ zueinander stationär gehalten sind, und mehrere Radiallager, die um die Aufnahme- und Dreheinrichtungen herum verteilt angeordnet sind, zur Aufnahme von auf die Aufnahme- und Dreheinrichtungen wirkenden Radialkräften, sodass sie in radialer Richtung stationär gehalten sind.

Die Erfindung ermöglicht insbesondere einen Aufbau mit einer Vielzahl von Schränkebenen, der vor allem in der Höhe sehr kompakt ist. Dies ermöglicht zum einen die kostengünstige Herstellung von Aufnahme- und Dreheinrichtungen bzw. Schränkwerkzeugen, zum anderen zeichnet sich die Erfindung durch den geringen Platzbedarf der gesamten Funktionsbaugruppe aus, die eine Vielzahl von Schränkwerkzeugen umfasst.

Ein zentraler Punkt der Erfindung ist das Lagerungskonzept zur Aufnahme der Prozesskräfte. Beim Schränkprozess treten sowohl Kräfte in radialer Richtung als auch in axialer Richtung auf.

Die Erfindung macht sich den Grundgedanken zu Nutze, eine Funktionstrennung vorzunehmen: Zur Aufnahme der Axialkräfte und zur Lagerung der einzelnen Schränkwerkzeuge aufeinander werden Axiallager eingesetzt. Radiallager werden zur Aufnahme der Radialkräfte eingesetzt.

Insbesondere werden die Radiallager an Positionen zusammengefasst und bevorzugt gleichmäßig um den Umfang der Schränkwerkzeuge verteilt.

Vorteilhafterweise dient der Außenring der Lager bzw. Radiallager neben der Aufnahme der Radialkräfte auch als Lauffläche für die Schränkwerkzeuge.

Insbesondere ist jedes Schränkwerkzeug um die gemeinsame Mittelachse drehbar bzw. kann dementsprechend angesteuert werden.

Ein weiterer Vorteil der Erfindung besteht darin, dass die gesamte Funktionsbaugruppe, welche die Schränkwerkzeuge umfasst, in der Vorrichtung getauscht werden kann, um z.B. einen anderen Werkstücktyp zu bearbeiten. Dies wird u.a. aufgrund der Kompaktheit der Vorrichtung erreicht, und durch die Möglichkeit, Antriebe zum Beispiel über als Hebel ausgestaltete Antriebselemente an die Aufnahme- und Dreheinrichtungen bzw. Schränkwerkzeuge anzubinden bzw. anzukoppeln.

Zum Beispiel können die Antriebe von den Antriebselementen bzw. Hebeln abgekoppelt werden, so dass die Funktionsbaugruppe aus der Vorrichtung gehoben werden kann. Somit bietet die Erfindung ein Schnellwechselsystem zum schnellen Wechseln der Funktionsbaugruppe.

Bevorzugt haben die Radiallager einen ringförmigen Außenumfang, der als Lauffläche für die Aufnahme- und Dreheinrichtungen bei deren Drehung ausgebildet ist.

Vorteilhaft dient ein Außenring der Radiallager neben der Aufnahme der Radialkräfte auch als Lauffläche für die Schränkwerkzeuge.

Vorzugsweise sind die Radiallager an mindestens drei Positionen, insbesondere bevorzugt an vier Positionen, um die Aufnahme- und Dreheinrichtung verteilt angeordnet.

Die Radiallager werden beispielsweise an den mindestens drei bzw. vorzugsweise vier Positionen zusammengefasst und bevorzugt gleichmäßig um den Umfang der Schränkwerkzeuge verteilt.

Vorteilhaft umfassen die Radiallager jeweils mehrere ringförmige Lagerelemente, die zum Beispiel drehbar um eine Radiallagerachse des jeweiligen Radiallagers gelagert sind.

Insbesondere hat jedes Lagerelement einen ringförmigen Außenumfang, der als Lauffläche für mindestens eine der Aufnahme- und Dreheinrichtungen ausgebildet ist, um sie bei deren Drehung in radialer Richtung stationär zu halten.

Erfindungsgemäß sind die Aufnahme- und Dreheinrichtungen in axialer Richtung aufeinander gelagert.

Vorteilhafterweise umfasst die Drahtendenbiegevorrichtung eine Zustelleinheit zum Zustellen mindestens eines der Radiallager radial von außen nach innen in Richtung der Aufnahme- und Dreheinrichtungen.

Insbesondere wird die Zustelleinheit durch einen Exzenter gebildet. Vorzugsweise umfasst die Drahtendenbiegevorrichtung eine dritte Aufnahme- und Dreheinrichtung zum Aufnehmen von zu den zweiten Drahtenden radial versetzten dritten Drahtenden und zum Verdrehen der dritten Drahtenden zwecks Verbiegen in Umfangsrichtung. Insbesondere umfasst die dritte Aufnahme- und Dreheinrichtung ein drittes Antriebselement zum Antreiben der dritten Aufnahme- und Dreheinrichtung.

Vorteilhaft umfasst die Drahtendenbiegevorrichtung eine oder mehrere weitere Aufnahme- und Dreheinrichtungen zum Aufnehmen von radial versetzten weiteren Drahtenden und zum Verdrehen der weiteren Drahtenden, um diese in Umfangsrichtung zu verbiegen. Insbesondere umfasst jede weitere Aufnahme- und Dreheinrichtungen ein weiteres Antriebselement zum Antreiben der weiteren Aufnahme- und Dreheinrichtung.

Gemäß einem zweiten Aspekt schafft die Erfindung ein Verfahren zum Verbiegen von Drahtenden beim Herstellen eines mit Spulen versehenen Bauteils einer elektrischen Maschine, wobei die Drahtenden aus einem ringförmigen Gehäuse des Bauteils herausragen und in einer Umfangsrichtung gebogen werden, umfassend die Schritte: Aufnehmen von ersten Drahtenden mittels einer ersten Aufnahme- und Dreheinrichtung; Aufnehmen von zu den ersten Drahtenden radial versetzten zweiten Drahtenden mittels einer zweiten Aufnahme- und Dreheinrichtung; Drehen der ersten Aufnahme- und Dreheinrichtung relativ zum Gehäuse, um die ersten Drahtenden in Umfangsrichtung zu verbiegen; Drehen der zweiten Aufnahme- und Dreheinrichtung relativ zum Gehäuse und relativ zur ersten Aufnahme- und Dreheinrichtung, um die zweiten Drahtenden in der Umfangsrichtung zu verbiegen; wobei die Aufnahme- und Dreheinrichtungen um eine gemeinsame Achse gedreht werden und in axialer Richtung relativ zueinander stationär gehalten werden, und wobei die Aufnahme- und Dreheinrichtungen an ihrem Außenumfang abgestützt werden und dadurch in radialer Richtung stationär gehalten werden.

Bevorzugt werden die Aufnahme- und Dreheinrichtungen an ihrem Außenumfang durch Radialkräfte aufnehmende Laufflächen gehalten, an denen sie bei ihrer Drehung vorzugsweise abrollen.

Vorteilhaft werden die Aufnahme- und Dreheinrichtungen an ihrem Außenumfang durch Radialkräfte aufnehmende Laufflächen an einer Bewegung in radialer Richtung gehindert.

Erfindungsgemäß sind die Aufnahme- und Dreheinrichtungen in axialer Richtung aufeinander gelagert.

Zum Beispiel werden die Aufnahme- und Dreheinrichtungen jeweils durch ein Antriebselement angetrieben, um die Drehung auszuführen.

Bei einer Alternative des erfindungsgemäßen Verfahrens wird zur Montage bzw. bei der Montage der Vorrichtung mindestens ein Radiallager radial von außen nach innen zu den Aufnahme- und Dreheinrichtungen zugestellt, um diese an ihrem Außenumfang gegen Radialkräfte abzustützen

Bei einer weiteren Alternative des erfindungsgemäßen Verfahrens wird zur Demontage bzw. bei der Demontage der Vorrichtung mindestens ein Radiallager radial von innen nach außen bewegt, um die Aufnahme- und Dreheinrichtungen in mindestens einer radialen Richtung freizugeben.

Vorteilhafterweise wird das erfindungsgemäße Verfahren mit einer erfindungsgemäßen Vorrichtung durchgeführt.

Vorteile, Merkmale und Details, die im Zusammenhang mit einem Aspekt der Erfindung beschrieben sind, gelten auch für den anderen Aspekt der Erfindung.

Ein Ausführungsbeispiel wird im Folgenden anhand der beigefügten Zeichnungen näher erläutert. Darin zeigt:
- **Fig. 1**: eine Drahtendenbiegevorrichtung gemäß einer bevorzugten Ausführungsform der Erfindung als dreidimensionale Ansicht schräg von oben;
- **Fig. 2a, b**: die in Fig. 1 dargestellte Drahtendenbiegevorrichtung als Draufsicht, wobei in Fig. 2b die Deckplatte weggelassen wurde;
- **Fig. 3**: eine Schnittdarstellung der Drahtendenbiegevorrichtung entlang der Linie K-K in Figur 2a; und
- **Fig. 4**: eine Schnittdarstellung der Drahtendenbiegevorrichtung entlang der Linie J-J in Figur 2a.

Elemente mit gleicher oder ähnlicher Funktion sind in den Figuren mit denselben Bezugszeichen gekennzeichnet. Sie werden nur dann wiederholt beschrieben, wenn dies zweckmäßig erscheint.

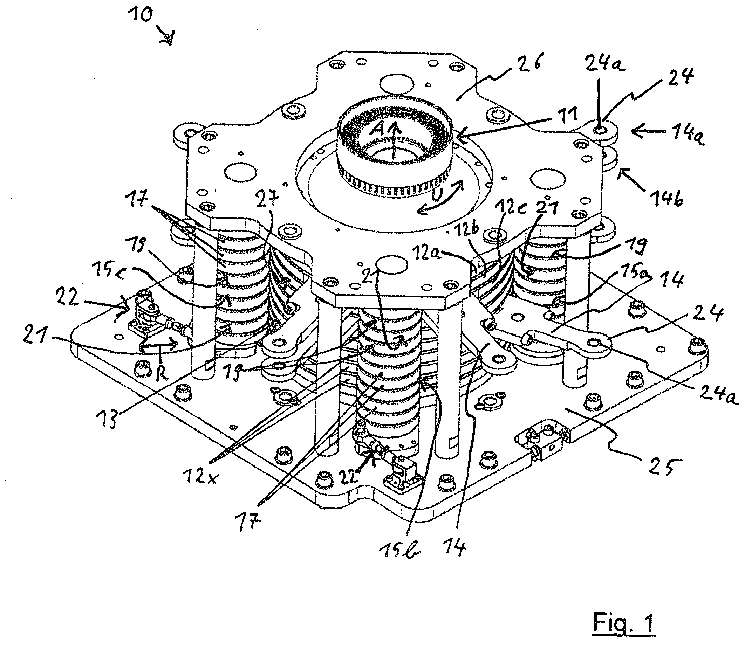

In **Figur 1** ist eine Drahtendenbiegevorrichtung 10 gemäß einer bevorzugten Ausführungsform der Erfindung als Ansicht schräg von oben schematisch dargestellt. Die Vorrichtung 10 dient zum Verbiegen von Drahtenden beim Herstellen eines Bauteils einer elektrischen Maschine, das mit Spulen versehen ist.

Das herzustellende Bauteil ist beispielsweise ein Stator eines Elektromotors. Der Stator soll insbesondere als Stator eines Fahrmotors eines Elektrofahrzeugs, vorzugsweise im Leistungsbereich von 20 kW bis 400 kW eingesetzt werden. Hierzu soll der Stator eine möglichst große Anzahl von Spulen erhalten, wobei die Spulen aus sogenannten Stableitern oder Hairpins erzeugt werden.

Die Drahtendenbiegevorrichtung 10 kann zum Beispiel als Teil einer Bauteilherstellvorrichtung zum Herstellen eines mit Spulen versehenen Bauteils einer elektrischen Maschine verwendet werden, wie sie beispielsweise in der eingangs genannten Druckschrift WO 2019/161846 A1 beschrieben ist.

Die Drahtendenbiegevorrichtung 10 ist dazu ausgestaltet, die Drahtenden, die aus einem ringförmigen bzw. zylindrischen Gehäuse 11 des Bauteils in axialer Richtung herausragen, in einer Umfangsrichtung des Gehäuses zu biegen.

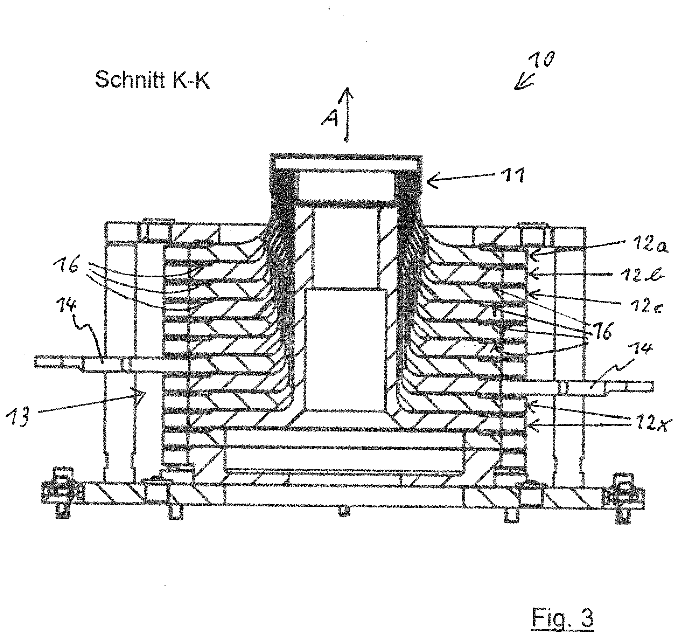

Wie aus der dreidimensionalen Ansicht von **Fig. 1** und der Schnittdarstellung von **Fig. 3** ersichtlich ist, weist die Drahtendenbiegevorrichtung bzw. Vorrichtung 10 eine Vielzahl von Aufnahme- und Dreheinrichtungen 12a, 12b, 12c,...12x auf, die als Schränkwerkzeuge ausgebildet sind und jeweils zum Aufnehmen von Drahtenden und zum Verdrehen der Drahtenden dienen, um diese in Umfangsrichtung U des Gehäuses 11 zu verdrehen.

Die Schränkwerkzeuge 12a, 12b, 12c,...12x sind als ringförmige Platten ausgebildet und in axialer Richtung direkt aufeinander gelagert. Sie bilden gemeinsam eine Schränkbaugruppe 13. Die Drahtenden, die von einem ersten Schränkwerkzeug 12a aufzunehmen sind, sind radial versetzt zu den Drahtenden, die von einem zweiten Schränkwerkzeug 12b aufzunehmen sind, welches an das erste Schränkwerkzeug 12a angrenzt.

D. h., das erste Schränkwerkzeug 12a ist dazu ausgestaltet, erste Drahtenden aufzunehmen und diese in der Umfangsrichtung U zu verbiegen, während das zweite Schränkwerkzeug 12b, das an das erste Schränkwerkzeug 12a in axialer Richtung angrenzt, zum Aufnehmen von zweiten Drahtenden ausgebildet ist, die zu den ersten Drahtenden radial versetzt angeordnet sind, um die zweiten Drahtenden in der Umfangsrichtung U zu verbiegen.

Ebenso ist das dritte Schränkwerkzeug 12c, das an das zweite Schränkwerkzeug 12b in axialer Richtung angrenzt, zum Aufnehmen von dritten Drahtenden ausgebildet, die zu den zweiten Drahtenden, die von dem zweiten Schränkwerkzeug 12b aufzunehmen sind, radial versetzt angeordnet sind, um die dritten Drahtenden in der Umfangsrichtung U zu verdrehen bzw. zu verbiegen.

Auf gleiche Weise ist jedes weitere Schränkwerkzeug 12x zum Aufnehmen von weiteren Drahtenden ausgebildet, die zu denjenigen Drahtenden radial versetzt angeordnet sind, die von dem vorhergehenden benachbarten Schränkwerkzeug aufzunehmen sind, um die weiteren Drahtenden in der Umfangsrichtung U zu verdrehen bzw. zu verbiegen.

Jedes Schränkwerkzeug 12a, 12b, 12c,...12x ist an seiner radial außen gelegenen Seite mit einem als Hebel ausgestalteten Antriebselement 14 versehen, um das Schränkwerkzeug 12a, 12b, 12c,...12x anzutreiben, d. h. in Umfangsrichtung bzw. um eine gemeinsame Mittelachse A der Schränkwerkzeuge 12a, 12b, 12c,...12x zu drehen. Zum Beispiel ist das Schränkwerkzeug 12a mit einem Hebel 14a versehen, und das Schränkwerkzeug 12b ist mit einem Hebel 14b versehen. Dabei können die einzelnen Schränkwerkzeuge 12a, 12b, 12c,...12x gegeneinander verdreht bzw. unabhängig voneinander gedreht werden.

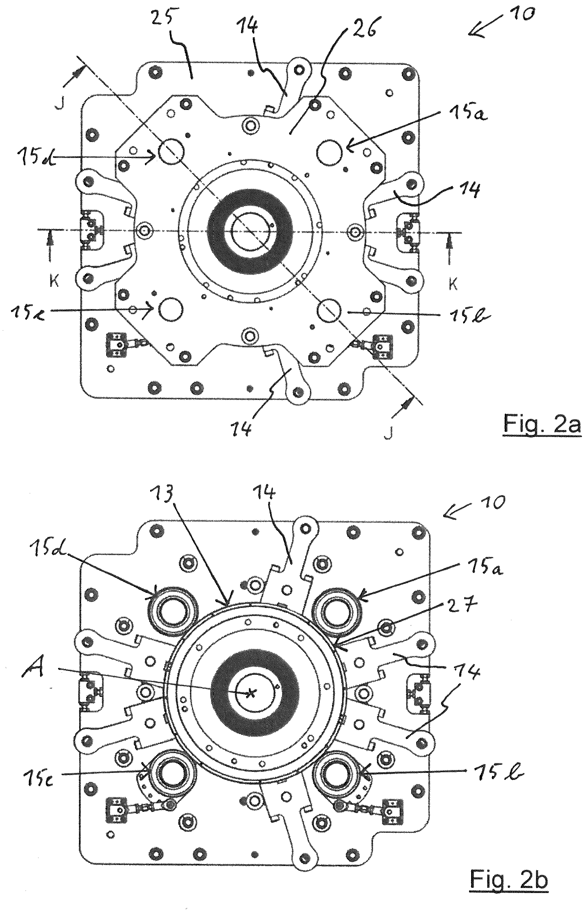

Mehrere Radiallager 15a, 15b, 15c, 15d, in diesem Beispiel vier, sind gleichmäßig um die Schränkwerkzeuge 12a, 12b, 12c,...12x herum verteilt angeordnet, um Radialkräfte aufzunehmen, die auf die Schränkwerkzeuge in radialer Richtung wirken (siehe ergänzend auch **Figuren 2a und 2b**). Durch die Radiallager 15a, 15b, 15c, 15d werden die Schränkwerkzeuge 12a, 12b, 12c,...12x in radialer Richtung stationär gehalten. Es können in anderen Ausführungsformen auch drei oder mehr als vier Radiallager vorgesehen sein.

Wie aus **Fig. 3** ersichtlich ist, die eine Schnittdarstellung der Drahtendenbiegevorrichtung entlang der Linie K-K in **Figur 2a** zeigt, dienen mehrere Axiallager 16 zur Lagerung der Schränkwerkzeuge 12a, 12b, 12c,...12x in axialer Richtung aufeinander und zur Aufnahme von in axialer Richtung A wirkenden Axialkräften, die auf die Schränkwerkzeuge 12a, 12b, 12c,...12x einwirken. Die Axiallager 16 sind so zwischen den jeweils übereinander angeordneten Schränkwerkzeugen 12a, 12b, 12c,...12x angeordnet, dass diese relativ zueinander und zu dem Gehäuse 11 um die ihre gemeinsame Mittelachse A drehbar sind und dabei in axialer Richtung durch die Axiallager 16 relativ zueinander stationär gehalten werden.

Da die als Schränkwerkzeuge 12a, 12b, 12c,...12x ausgebildeten Aufnahme- und Dreheinrichtungen durch die Axiallager 16 direkt aufeinander gelagert sind, ist der gesamte Aufbau der aus den Schränkwerkzeugen 12a, 12b, 12c,...12x gebildeten Schränkbaugruppe 13 und damit auch der gesamten Drahtendenbiegevorrichtung 10 in vertikaler Richtung, d. h. in Richtung der Mittelachse A, sehr kompakt.

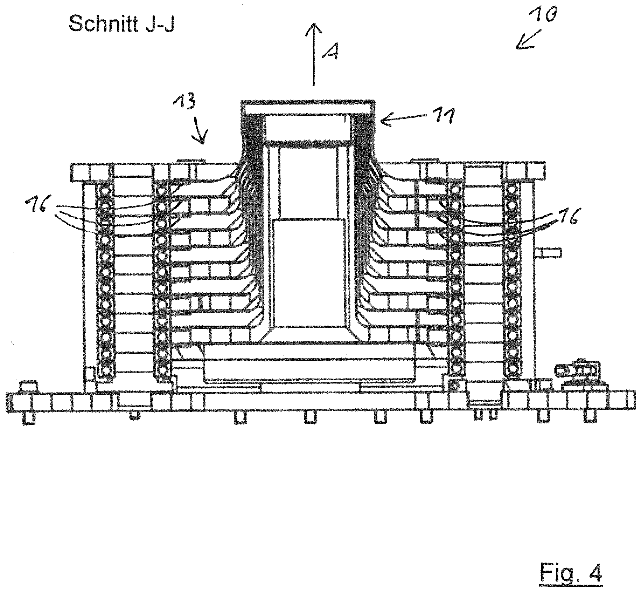

**Figur 4** dient zur weiteren Veranschaulichung der Vorrichtung 10 und zeigt eine Schnittdarstellung der Drahtendenbiegevorrichtung entlang der Linie J-J in Figur 2a.

Zurückkommend zu **Fig. 1** weist jedes Radiallager 15a, 15b, 15c, 15d mehrere ringförmige Lagerelemente 17 auf, die ringförmig gestaltet sind und drehbar um eine gemeinsame Radiallagerachse R des jeweiligen Radiallagers 15a, 15b, 15c, 15d gelagert sind. Die Lagerelemente 17 jedes Radiallagers 15a, 15b, 15c, 15d sind in axialer Richtung übereinander angeordnet.

Jedes Lagerelement 17 hat einen ringförmigen Außenumfang 19, mit dem es an den ringförmigen Außenumfang eines dem Lagerelement zugeordneten Schränkwerkzeugs 12a, 12b, 12c,...12x angrenzt. Der ringförmige Außenumfang 19 jedes Lagerelements 17 ist als Lauffläche für eines der Schränkwerkzeuge 12a, 12b, 12c,...12x ausgebildet, die radial innenliegend zwischen den sie umgebenden Radiallagern 15a, 15b, 15c, 15d angeordnet sind. Auf diese Weise werden die Schränkwerkzeuge 12a, 12b, 12c,...12x bei ihrer Drehung von den Lagerelementen 17 in radialer Richtung stationär gehalten.

Durch die Anordnung seiner ringförmigen Lagerelemente 17 übereinander bzw. in axialer Richtung und miteinander fluchtend hat jedes der Radiallager 15a, 15b, 15c, 15d einen ringförmigen Außenumfang 21, der als eine Lauffläche für die Schränkwerkzeuge 12a, 12b, 12c,...12x bei deren Drehung um die Mittelachse A des Gehäuses 11 ausgebildet ist.

Jedes Radiallager 15a, 15b, 15c, 15d mit seiner Vielzahl von Lagerelementen 17 ist in radialer Richtung bewegbar. Dadurch kann es mittels einer Bewegung radial nach außen von der Schränkbaugruppe 13 entfernt bzw. wegbewegt werden. Zu diesem Zweck sind die Radiallager 15a, 15b, 15c, 15d jeweils mit einer Zustelleinheit 22 verbunden, die durch einen Exzenter gebildet wird bzw. einen Exzenter umfasst, um das jeweilige Radiallager in radialer Richtung zur Schränkbaugruppe 13 hin bzw. von dieser weg zu bewegen.

Die Hebel 14, die als Antriebselement zum Antreiben der jeweils zugeordneten Schränkwerkzeuge 12a, 12b, 12c,...12x dienen, umfassen jeweils ein Ankoppelelement 24 zum Ankoppeln einer in der Figur nicht dargestellten Antriebseinheit, um jedes Schränkwerkzeug 12a, 12b, 12c,...12x über den zugeordneten Hebel 14 in Umfangsrichtung zu drehen, so dass die in dem jeweiligen Schränkwerkzeug 12a, 12b, 12c,...12x gehaltenen Drahtenden in Umfangsrichtung gebogen werden.

Die Ankoppelelemente 24 sind derart gestaltet, dass sie auf einfache und schnelle Weise an das jeweils zugeordnete Antriebselement 14 gekoppelt und von diesen abgekoppelt werden können. In diesem Beispiel sind in den Ankoppelelementen 24 jeweils Öffnungen 24a vorgesehen, die zur Aufnahme eines Bolzens zum Befestigen der zugehörigen Antriebseinheit dienen.

Die Schränkbaugruppe 13 mit ihrer Vielzahl von Schränkwerkzeugen 12a, 12b, 12c,...12x ist in axialer Richtung zwischen einer unten gelegenen Basisplatte 25 und einer oben gelegenen Deckplatte 26 gelagert. Zwischen der Basisplatte 25 und der Deckplatte 26 sind als Säulen ausgestaltete Stützelemente 27 vorgesehen.

**Figur 2a** zeigt zur weiteren Veranschaulichung des Lagerungskonzepts für Schränkwerkzeuge, wie es durch die Drahtendenbiegevorrichtung 10 gebildet wird, eine Draufsicht auf die Drahtendenbiegevorrichtung bzw. Vorrichtung 10 mit der oben angeordneten Deckplatte 26 und der unten angeordneten Basisplatte 25. Zwischen den beiden Platten 25 und 26 ist die Schränkbaugruppe 13 mit den Schränkwerkzeugen angeordnet.

**Figur 2b** zeigt eine ähnliche Draufsicht, bei der jedoch die Deckplatte 26 weggelassen wurde. Dadurch wird insbesondere die ringförmige Schränkbaugruppe 13 mit den sie umgebenden Radiallagern 15a, 15b, 15c, 15d veranschaulicht, die auf 4 Positionen gleichmäßig um den Umfang der Schränkwerkzeuge 12a, 12b, 12c,...12x verteilt sind.

Jedes Schränkwerkzeug 12a, 12b, 12c,...12x wird mit einem Hebel 14 angetrieben und kann um die gemeinsame Mittelachse A rotieren. Durch die Auswahl von vier Radiallagerpositionen ergibt sich für jeden Antrieb ein großer Schränkwinkel und zugleich eine hohe Flexibilität bezüglich der Anordnung der Antriebe.

Nachfolgend wird anhand der Figuren ein bevorzugtes Ausführungsbeispiel des erfindungsgemäßen Verfahrens beschrieben.

In diesem Beispiel wird das Verfahren zum Verbiegen von Drahtenden beim Herstellen eines mit Spulen versehenen Stators durchgeführt. Die Drahtenden ragen aus einem ringförmigen Gehäuse 11 hervor und werden mit dem Verfahren in Umfangsrichtung des Gehäuses gebogen.

In einem ersten Schritt werden die Drahtenden in den Aufnahme- und Dreheinrichtungen bzw. Schränkwerkzeugen 12a, 12b, 12c,...12x aufgenommen, von denen jedes eine Aufnahme- und Dreheinrichtung bildet. Die Drahtenden, die in jeweils benachbarten bzw. aneinandergrenzenden Schränkwerkzeugen aufgenommen werden, sind jeweils versetzt zueinander. D. h. es werden erste Drahtenden mittels dem ersten Schränkwerkzeug 12a aufgenommen, und es werden zweite Drahtenden mittels dem zweiten Schränkwerkzeug 12b aufgenommen, wobei die zweiten Drahtenden radial versetzt zu den ersten Drahtenden angeordnet sind.

In einem dritten Schränkwerkzeug 12c und in weiteren Schränkwerkzeugen 12x werden dritte bzw. weitere Drahtenden aufgenommen, die jeweils radial versetzt zu den Drahtenden sind, die in dem vorhergehenden Schränkwerkzeug aufgenommen werden.

Nun wird das erste Schränkwerkzeug 12a relativ zu dem Gehäuse 11 gedreht, wodurch die darin aufgenommenen ersten Drahtenden in Umfangsrichtung U des Gehäuses 11 verbogen werden. Das benachbart zum ersten Schränkwerkzeug 12a angeordnete zweite Schränkwerkzeug 12b mit den darin aufgenommenen zweiten Drahtenden wird ebenfalls relativ zum Gehäuse 11 gedreht, um die zweiten Drahtenden in Umfangsrichtung zu verbiegen. Dabei findet auch eine relative Drehbewegung zwischen dem ersten und dem zweiten Schränkwerkzeug statt.

Ebenso werden das dritte Schränkwerkzeug 12c und weitere Schränkwerkzeuge 12x mit den darin aufgenommenen zweiten bzw. weiteren Drahtenden relativ zum Gehäuse 11 gedreht, wodurch die zweiten und die weiteren Drahtenden in der Umfangsrichtung U verdreht bzw. gebogen werden. Dabei sind die Drahtenden jeweils radial versetzt zu den Drahtenden angeordnet, die in dem vorhergehenden Schränkwerkzeug aufgenommen sind, und es findet ebenfalls eine relative Drehbewegung zwischen zwei benachbarten bzw. aneinandergrenzenden Schränkwerkzeugen statt.

Bei ihrer Drehung werden die Schränkwerkzeuge 12a, 12b, 12c um ihre gemeinsame Mittelachse A gedreht. Dabei werden die Schränkwerkzeuge 12a, 12b, 12c,...12x in axialer Richtung durch die Axiallager 16 relativ zueinander stationär gehalten. Zusätzlich werden die Schränkwerkzeuge 12a, 12b, 12c,...12x jeweils an ihrem Außenumfang 27 abgestützt, wodurch sie in radialer Richtung R stationär gehalten werden.

Das Abstützen erfolgt durch die oben beschriebenen Radiallager 15a, 15b, 15c, wobei jedes Radiallager 15a, 15b, 15c von außen die radial innen angeordneten Schränkwerkzeuge abstützt, sodass sich diese nicht radial nach außen bewegen können.

Die Schränkwerkzeuge 12a, 12b, 12c,...12x rollen bei ihrer Drehung an Laufflächen 19 bzw. 21 ab, die an ihrem Außenumfang 27 angeordnet sind und Radialkräfte aufnehmen.

Dadurch werden die Schränkwerkzeuge 12a, 12b, 12c,...12x an einer Bewegung in radialer Richtung gehindert.

Die Schränkwerkzeuge 12a, 12b, 12c,...12x werden durch die Axiallager 16 in axialer Richtung aufeinander gelagert und werden jeweils durch ein Antriebselement 14 angetrieben, um ihre jeweilige Drehung auszuführen.

Zur Montage einer Schränkbaugruppe in der Drahtendenbiegevorrichtung 10 wird mindestens eines der Radiallager 15a, 15b, 15c, 15d radial von außen nach innen zu den Schränkwerkzeugen 12a, 12b, 12c,...12x zugestellt, um diese an ihrem Außenumfang gegen Radialkräfte abzustützen.

Zur Demontage der Schränkbaugruppe und/oder zu ihrem Austausch wird mindestens eines der Radiallager 15a, 15b, 15c, 15d radial von innen nach außen bewegt, um die Schränkwerkzeuge 12a, 12b, 12c,...12x in mindestens einer radialen Richtung freizugeben.

### Bezugszeichenliste:

- 10: Drahtendenbiegevorrichtung bzw. Vorrichtung
- 12a, 12b, 12c,...12x: Aufnahme- und Dreheinrichtungen bzw. Schränkwerkzeuge
- 13: Schränkbaugruppe
- 14: Antriebselement / Hebel
- 14a, 14b: erstes bzw. zweites Antriebselement
- 15a, 15b, 15c, 15d: Radiallager
- 16: Axiallager
- 17: Lagerelemente der Radiallager
- 19: Außenumfang der Lagerelemente / Lauffläche
- 21: Außenumfang der Radiallager / Lauffläche
- 22: Zustelleinheit
- 24: Ankoppelelement
- 24a: Öffnung
- 25: Basisplatte
- 26: Deckplatte
- 27: Außenumfang der Schränkwerkzeuge
- A: axiale Richtung, Mittelachse
- R: radiale Richtung
- U: Umfangsrichtung

## Patentansprüche

1. Drahtendenbiegevorrichtung zum Verbiegen von Drahtenden beim Herstellen eines mit Spulen versehenen Bauteils einer elektrischen Maschine, wobei die Drahtenden aus einem ringförmigen Gehäuse (11) des Bauteils herausragen und in einer Umfangsrichtung gebogen werden, umfassend
eine erste Aufnahme- und Dreheinrichtung (12a) zum Aufnehmen von ersten Drahtenden und zum Verdrehen der ersten Drahtenden zwecks Verbiegen in Umfangsrichtung,
mindestens eine zweite Aufnahme- und Dreheinrichtung (12b) zum Aufnehmen von zu den ersten Drahtenden radial versetzten zweiten Drahtenden und zum Verdrehen der zweiten Drahtenden zwecks Verbiegen in Umfangsrichtung,
ein erstes Antriebselement (14a) zum Antreiben der ersten Aufnahme- und Dreheinrichtung (12a),
ein zweites Antriebselement (14b) zum Antreiben der zweiten Aufnahme- und Dreheinrichtung (12b),
mehrere Axiallager (16) zur Aufnahme von auf die Aufnahme- und Dreheinrichtungen (12a, 12b) wirkenden Axialkräften, und zur Lagerung der Aufnahme- und Dreheinrichtungen (12a, 12b) in axialer Richtung aufeinander, so dass sie relativ zueinander und zu dem Gehäuse (11) um eine gemeinsame Achse (A) drehbar, jedoch in axialer Richtung relativ zueinander stationär gehalten sind,
und mehrere Radiallager (15a, 15b, 15c, 15d), die um die Aufnahme- und Dreheinrichtungen (12a, 12b) herum verteilt angeordnet sind, zur Aufnahme von auf die Aufnahme- und Dreheinrichtungen (12a, 12b) wirkenden Radialkräften, sodass sie in radialer Richtung stationär gehalten sind.

2. Drahtendenbiegevorrichtung nach Anspruch 1, **dadurch gekennzeichnet, dass** die Radiallager (15a, 15b, 15c, 15d) einen ringförmigen Außenumfang (21) haben, der als Lauffläche für die Aufnahme- und Dreheinrichtungen (12a, 12b) bei deren Drehung ausgebildet ist.

3. Drahtendenbiegevorrichtung nach einem der vorhergehenden Ansprüche, **dadurch gekennzeichnet, dass** die Radiallager auf mindestens drei Positionen um die Aufnahme- und Dreheinrichtung verteilt angeordnet sind.

4. Drahtendenbiegevorrichtung nach einem der vorhergehenden Ansprüche, **dadurch gekennzeichnet, dass** die Radiallager (15a, 15b, 15c, 15d) jeweils mehrere ringförmige Lagerelemente (17) umfassen, die drehbar um eine Radiallagerachse (R) des jeweiligen Radiallagers (15a, 15b, 15c, 15d) gelagert sind, wobei jedes Lagerelement (17) einen ringförmigen Außenumfang hat (19), der als Lauffläche für mindestens eine der Aufnahme- und Dreheinrichtungen (12a, 12b) ausgebildet ist, um sie bei deren Drehung in radialer Richtung stationär zu halten.

5. Drahtendenbiegevorrichtung nach einem der vorhergehenden Ansprüche, **dadurch gekennzeichnet, dass** die Aufnahme- und Dreheinrichtungen (12a, 12b) in axialer Richtung aufeinander gelagert sind.

6. Drahtendenbiegevorrichtung nach einem der vorhergehenden Ansprüche, **gekennzeichnet durch** eine Zustelleinheit (22) zum Zustellen mindestens eines der Radiallager (15a, 15b, 15c, 15d) radial von außen nach innen in Richtung der Aufnahme- und Dreheinrichtungen (12a, 12b).

7. Drahtendenbiegevorrichtung nach einem der vorhergehenden Ansprüche, **gekennzeichnet durch**
7.1. eine dritte Aufnahme- und Dreheinrichtung (12c) zum Aufnehmen von zu den zweiten Drahtenden radial versetzten dritten Drahtenden und zum Verdrehen der dritten Drahtenden zwecks Verbiegen in Umfangsrichtung (U), umfassend ein drittes Antriebselement (14) zum Antreiben der dritten Aufnahme- und Dreheinrichtung, und/oder
7.2. eine oder mehrere weitere Aufnahme- und Dreheinrichtungen (12d) zum Aufnehmen von radial versetzten weiteren Drahtenden und zum Verdrehen der weiteren Drahtenden zwecks Verbiegen in Umfangsrichtung (U), umfassend ein weiteres Antriebselement (14) zum Antreiben der weiteren Aufnahme- und Dreheinrichtung (12d).

8. Verfahren zum Verbiegen von Drahtenden beim Herstellen eines mit Spulen versehenen Bauteils einer elektrischen Maschine, wobei die Drahtenden aus einem ringförmigen Gehäuse (11) des Bauteils herausragen und in einer Umfangsrichtung (U) gebogen werden, umfassend die Schritte:
Aufnehmen von ersten Drahtenden mittels einer ersten Aufnahme- und Dreheinrichtung (12a);
Aufnehmen von zu den ersten Drahtenden radial versetzten zweiten Drahtenden mittels einer zweiten Aufnahme- und Dreheinrichtung (12b);
Drehen der ersten Aufnahme- und Dreheinrichtung (12a) relativ zum Gehäuse (11), um die ersten Drahtenden in Umfangsrichtung (U) zu verbiegen;
Drehen der zweiten Aufnahme- und Dreheinrichtung (12b) relativ zum Gehäuse (11) und relativ zur ersten Aufnahme- und Dreheinrichtung (12a), um die zweiten Drahtenden in der Umfangsrichtung (U) zu verbiegen;
wobei die Aufnahme- und Dreheinrichtungen (12a, 12b) in axialer Richtung aufeinander gelagert werden, um eine gemeinsame Achse (A) gedreht werden und in axialer Richtung relativ zueinander stationär gehalten werden,
und wobei die Aufnahme- und Dreheinrichtungen (12a, 12b) an ihrem Außenumfang abgestützt werden und dadurch in radialer Richtung stationär gehalten werden, wobei
8.1. zur Montage mindestens ein Radiallager (15a, 15b, 15c, 15d) radial von außen nach innen zu den Aufnahme- und Dreheinrichtungen (12a, 12b) zugestellt wird, um diese an ihrem Außenumfang gegen Radialkräfte abzustützen; und/oder
8.2. zur Demontage mindestens ein Radiallager (15a, 15b, 15c, 15d) radial von innen nach außen bewegt wird, um die Aufnahme- und Dreheinrichtungen (12a, 12b) in mindestens einer radialen Richtung freizugeben.

9. Verfahren nach Anspruch 8, **dadurch gekennzeichnet, dass** die Aufnahme- und Dreheinrichtungen (12a, 12b) an ihrem Außenumfang durch Radialkräfte aufnehmende Laufflächen (19, 21) gehalten werden, an denen sie bei ihrer Drehung abrollen.

10. Verfahren nach Anspruch 8 oder 9, **dadurch kennzeichnet, dass** die Aufnahme- und Dreheinrichtungen (12a, 12b) an ihrem Außenumfang durch Radialkräfte aufnehmende Laufflächen (19, 21) an einer Bewegung in radialer Richtung gehindert werden.

11. Verfahren nach einem der Ansprüche 8 bis 10, **dadurch gekennzeichnet, dass** die Aufnahme- und Dreheinrichtungen (12a, 12b) in axialer Richtung aufeinander gelagert sind.

12. Verfahren nach einem der Ansprüche 8 bis 11, **dadurch gekennzeichnet, dass** die Aufnahme- und Dreheinrichtungen (12a, 12b) jeweils durch ein Antriebselement (14) angetrieben werden, um die Drehung auszuführen.

13. Verfahren nach einem der Ansprüche 8 bis 12, **dadurch gekennzeichnet, dass** es mit einer Vorrichtung (10) nach einem der Ansprüche 1 bis 7 durchgeführt wird.

## Claims

1. Wire-end bending apparatus for bending wire ends when producing a component of an electrical machine which is provided with coils, wherein the wire ends protrude from an annular housing (11) of the component and are bent in a circumferential direction, the apparatus comprising:
a first receiving and rotating device (12a) for receiving first wire ends and for twisting the first wire ends for the purpose of bending in the circumferential direction,
at least a second receiving and rotating device (12b) for receiving second wire ends radially offset to the first wire ends and for twisting the second wire ends for the purpose of bending in the circumferential direction,
a first drive element (14a) for driving the first receiving and rotating device (12a),
a second drive element (14b) for driving the second receiving and rotating device (12b),
a number of axial bearings (16) for absorbing axial forces acting on the receiving and rotating devices (12a, 12b) and for supporting the rotating and
receiving devices (12a, 12b) in an axial direction so that they can rotate relative to each other and to the housing (11) about a common axis (A), but are held stationary relative to each other in the axial direction,
and a number of radial bearings (15a, 15b, 15c, 15d) which are distributed around the receiving and rotating devices (12a, 12b) for absorbing radial forces acting on the receiving and rotating devices (12a, 12b) so that they are held stationary in the radial direction.

2. Wire-end bending apparatus according to claim 1, **characterized in that** the radial bearings (15a, 15b, 15c, 15d) have an annular outer circumference (21) which is designed as a running surface for the receiving and rotating devices (12a, 12b) during their rotation.

3. Wire-end bending apparatus according to any one of the preceding claims, **characterized in that** the radial bearings are distributed to at least three positions around the receiving and rotating device.

4. Wire-end bending apparatus according to any one of the preceding claims, **characterized in that** the radial bearings (15a, 15b, 15c, 15d) each comprise a number of annular bearing elements (17) which are supported to be rotatable about a radial bearing axis (R) of the respective radial bearing (15a, 15b, 15c, 15d), wherein each bearing element (17) has an annular outer circumference (19) which is designed as a running surface for at least one of the receiving and rotating devices (12a, 12b) in order to hold them stationary during their rotation in a radial direction.

5. Wire-end bending apparatus according to any one of the preceding claims, **characterized in that** the receiving and rotating devices (12a, 12b) are supported on top of each other in the axial direction.

6. Wire-end bending apparatus according to any one of the preceding claims, **characterized by** a feed unit (22) for feeding at least one radial bearing (15a, 15b, 15c, 15d) radially from the inside to the outside in the direction of the receiving and rotating devices (12a, 12b).

7. Wire-end bending apparatus according to any one of the preceding claims, **characterized by**
7.1 a third receiving and rotating device (12c) for receiving third wire ends radially offset to the second wire ends and for twisting the third wire ends for the purpose of bending in the circumferential direction (U), comprising a third drive element (14) for driving the third receiving and rotating device, and/or
7.2 one or more additional receiving and rotating devices (12d) for receiving additional radially offset wire ends and for twisting the additional wire ends for the purpose of bending in the circumferential direction (U), comprising another drive element (14) for driving the additional receiving and rotating device (12d).

8. Method for bending wire ends when producing a component of an electrical machine which is provided with coils, wherein the wire ends protrude from an annular housing (11) of the component and are bent in a circumferential direction (U), the method comprising:
receiving first wire ends by means of a first receiving and rotating device (12a);
receiving second wire ends radially offset to the first wire ends by means of a second receiving and rotating device (12b);
rotating the first receiving and rotating device (12a) relative to the housing (11) in order to bend the first wire ends in the circumferential direction (U);
rotating the second receiving and rotating device (12b) relative to the housing (11) and relative to the receiving and rotating device (12a) in order to bend the second wire ends in the circumferential direction (U);
wherein the receiving and rotating devices (12a, 12b) are supported one on top of the other in the axial direction, are rotated about a common axis (A) and are held stationary relative to each other in the axial direction,
and wherein the receiving and rotating devices (12a, 12b) are supported on their outer circumference and thus held stationary in the radial direction,
wherein
8.1 for mounting, at least one radial bearing (15a, 15b, 15c, 15d) is radially fed to the receiving and rotating devices (12a, 12b) from the outside to the inside in order to support them on their outer circumference against radial forces; und/or
8.2 for dismounting, at least one radial bearing (15a, 15b, 15c, 15d) is radially moved from the inside to the outside in order to release the receiving and rotating devices (12a, 12b) at least in a radial direction.

9. Method according to claim 8, **characterized in that** the receiving and rotating devices (12a, 12b) are held on their outer circumference by running surfaces (19, 21) which absorb radial forces and against which they roll off during rotation.

10. Method according to claim 8 or 9, **characterized in that** the receiving and rotating devices (12a, 12b) are prevented from moving in a radial direction on their outer circumference by running surfaces (19, 21) which absorb radial forces.

11. Method according to any one of claims 8 to 10, **characterized in that** the receiving and rotating devices (12a, 12b) are supported on top of each other in the axial direction.

12. Method according to any one of claims 8 to 11, **characterized in that** the receiving and rotating devices (12a, 12b) are each driven by a drive element (14) in order to perform the rotation.

13. Method according to any one of claims 8 to 12, **characterized in that** the method is carried out with an apparatus (10) according to any one of claims 1 to 7.

## Revendications

1. Appareil de cintrage d'extrémités de fil lors de la production d'un composant de machine électrique pourvu de bobines, dans lequel les extrémités de fil dépassent d'un boîtier annulaire (11) du composant et sont cintrées dans une direction circonférentielle, l'appareil comprenant:
un premier dispositif de réception et de rotation (12a) pour recevoir les premières extrémités de fil et pour tordre les premières extrémités de fil dans le but de les cintrer dans la direction circonférentielle,
au moins un deuxième dispositif de réception et de rotation (12b) pour recevoir les deuxièmes extrémités de fil radialement décalées par rapport aux premières extrémités de fil et pour tordre les deuxièmes extrémités de fil dans le but de les cintrer dans la direction circonférentielle,
un premier élément d'entraînement (14a) pour entraîner le premier dispositif de réception et de rotation (12a),
un deuxième élément d'entraînement (14b) pour entraîner le deuxième dispositif de réception et de rotation (12b),
de plusieurs paliers axiaux (16) pour absorber les forces axiales agissant sur les dispositifs de réception et de rotation (12a, 12b) et pour supporter les dispositifs de réception et de rotation (12a, 12b) dans une direction axiale de sorte qu'ils puissent tourner l'un par rapport à l'autre et par rapport au boîtier (11) autour d'un axe commun (A), mais qu'ils soient maintenus immobiles l'un par rapport à l'autre dans la direction axiale,
et de plusieurs paliers radiaux (15a, 15b, 15c, 15d) répartis autour des dispositifs de réception et de rotation (12a, 12b) pour absorber les forces radiales agissant sur les dispositifs de réception et de rotation (12a, 12b) de manière à les maintenir immobiles dans la direction radiale.

2. Appareil de cintrage d'extrémités de fil selon la revendication 1, **caractérisé en ce que** les paliers radiaux (15a, 15b, 15c, 15d) ont une circonférence extérieure annulaire (21) qui est conçue comme une surface de roulement pour les dispositifs de réception et de rotation (12a, 12b) au cours de leur rotation.

3. Appareil de cintrage d'extrémités de fil selon l'une quelconque des revendications précédentes, **caractérisé en ce que** les paliers radiaux sont répartis sur au moins trois positions autour du dispositif de réception et de rotation.

4. Appareil de cintrage d'extrémités de fil selon l'une quelconque des revendications précédentes, **caractérisé en ce que** les paliers radiaux (15a, 15b, 15c, 15d) comprennent chacun un certain nombre d'éléments de palier annulaires (17) qui sont supportés pour être rotatifs autour d'un axe de palier radial (R) du palier radial respectif (15a, 15b, 15c, 15d), chaque élément de roulement (17) ayant une circonférence extérieure annulaire (19) qui est conçue comme une surface de roulement pour au moins un des dispositifs de réception et de rotation (12a, 12b) afin de les maintenir immobiles pendant leur rotation dans une direction radiale.

5. Appareil de cintrage d'extrémités de fil selon l'une quelconque des revendications précédentes, **caractérisé en ce que** les dispositifs de réception et de rotation (12a, 12b) sont supportés l'un sur l'autre dans la direction axiale.

6. Appareil de cintrage d'extrémités de fil selon l'une quelconque des revendications précédentes, **caractérisé par** une unité d'alimentation (22) pour alimenter au moins un palier radial (15a, 15b, 15c, 15d) radialement de l'intérieur vers l'extérieur en direction des dispositifs de réception et de rotation (12a, 12b).

7. Appareil de cintrage d'extrémités de fil selon l'une quelconque des revendications précédentes, **caractérisé par**
7.1 un troisième dispositif de réception et de rotation (12c) pour recevoir les troisièmes extrémités de fil décalées radialement par rapport aux deuxièmes extrémités de fil et pour tordre les troisièmes extrémités de fil dans le but de les cintrer dans la direction circonférentielle (U), comprenant un troisième élément d'entraînement (14) pour entraîner le troisième dispositif de réception et de rotation, et/ou
7.2 un ou plusieurs autres dispositifs de réception et de rotation (12d) pour recevoir d'autres extrémités de fil décalées radialement et pour tordre les autres extrémités de fil dans le but de les cintrer dans la direction circonférentielle (U), comprenant un autre élément d'entraînement (14) pour entraîner l'autre dispositif de réception et de rotation (12d).

8. Procédé de cintrage d'extrémités de fil lors de la production d'un composant d'une machine électrique pourvu de bobines, dans lequel procédé les extrémités de fil dépassent d'un boîtier annulaire (11) du composant et sont cintrées dans une direction circonférentielle (U), le procédé comprenant:
recevoir des premières extrémités de fil au moyen d'un premier dispositif de réception et de rotation (12a);
recevoir des deuxièmes extrémités de fil décalées radialement par rapport aux premières extrémités de fil au moyen d'un deuxième dispositif de réception et de rotation (12b);
faire tourner le premier dispositif de réception et de rotation (12a) par rapport au boîtier (11) afin de cintrer les premières extrémités de fil dans la direction circonférentielle (U);
faire tourner le deuxième dispositif de réception et de rotation (12b) par rapport au boîtier (11) et par rapport au dispositif de réception et de rotation (12a) afin de cintrer les deuxièmes extrémités de fil dans la direction circonférentielle (U);
dans lequel les dispositifs de réception et de rotation (12a, 12b) sont supportés l'un sur l'autre dans la direction axiale, sont tournés autour d'un axe commun (A) et sont maintenus immobiles l'un par rapport à l'autre dans la direction axiale,
et dans lequel les dispositifs de réception et de rotation (12a, 12b) sont supportés sur leur circonférence extérieure et donc maintenus immobiles dans la direction radiale, dans lequel
8.1 pour le montage, au moins un palier radial (15a, 15b, 15c, 15d) est alimenté radialement aux dispositifs de réception et de rotation (12a, 12b) de l'extérieur vers l'intérieur afin de les soutenir sur leur circonférence extérieure contre les forces radiales; et/ou
8.2 lors du démontage, au moins un palier radial (15a, 15b, 15c, 15d) est déplacé radialement de l'intérieur vers l'extérieur afin de libérer les dispositifs de réception et de rotation (12a, 12b) au moins dans une direction radiale.

9. Procédé selon la revendication 8, **caractérisé en ce que** les dispositifs de réception et de rotation (12a, 12b) sont maintenus sur leur circonférence extérieure par des surfaces de roulement (19, 21) qui absorbent les forces radiales et contre lesquelles ils roulent pendant la rotation.

10. Procédé selon la revendication 8 ou 9, **caractérisé en ce que** les dispositifs de réception et de rotation (12a, 12b) sont empêchés de se déplacer dans une direction radiale sur leur circonférence extérieure par des surfaces de roulement (19, 21) qui absorbent les forces radiales.

11. Procédé selon l'une quelconque des revendications 8 à 10, **caractérisé en ce que** les dispositifs de réception et de rotation (12a, 12b) sont supportés l'un sur l'autre dans la direction axiale.

12. Procédé selon l'une quelconque des revendications 8 à 11, **caractérisé en ce que** les dispositifs de réception et de rotation (12a, 12b) sont chacun entraînés par un élément d'entraînement (14) afin d'effectuer la rotation.

13. Procédé selon l'une quelconque des revendications 8 à 12, **caractérisé en ce que** le procédé est mis en oeuvre avec un appareil (10) selon l'une quelconque des revendications 1 à 7.
